# EUROPÄISCHE PATENTANMELDUNG

(11) **EP 0 730 933 A1**
(43) Veröffentlichungstag der Anmeldung: **11.09.1996**
(21) Anmeldenummer: 96102314.0
(22) Anmeldetag: 16.02.1996
(51) Int. Cl.: B26D 3/16, B23D 21/08

(54) **Rohrabschneidezange**

(30) Priorität: 07.03.1995 DE 29503861 U
(71) Anmelder: VULKAN LOKRING GmbH & Co. KG, 44653 Herne (DE)
(72) Erfinder: Schwalm, Dieter, D-33813 Oerlinghausen (DE)
(74) Vertreter: Finkener und Ernesti Patentanwälte

(57) **Zusammenfassung**

Die Erfindung betrifft ein Handwerkzeug zum Abschneiden von Rohrstücken von Rohren aus metallischen, insbesondere nichteisenmetallischen Werkstoffen oder Kunststoff. Dieses Werkzeug ist wie eine Handzange mit zwei Klemmbacken (3, 4) ausgebildet. Dabei sind an den beiden Klemmbacken (3, 4) wenigstens drei kreisrunde Schneidmesser (8, 9) in einer gemeinsamen, zur Schwenkachse der Zange (die mit der Rohrachse zusammenfällt) senkrechten Ebene frei drehbar gelagert, von denen zwei Schneidmesser (8) an einer
Klemmbacke (3) und das dritte Schneidmesser (9) an der anderen Klemmbacke (4) angeordnet sind. Jede einzelne Klemmbacke (3, 4) ist wie eine zweischenklige Gabel ausgebildet, wobei zwischen den Gabelschenkeln (6, 7) die Schneidmesser (8, 9) gelagert sind. Der drehbaren Lagerung der Schneidmesser (8, 9) dient jeweils ein Bolzen (10), der mit seinen Enden in Bohrungen der Gabelschenkel (6, 7) drehfest gehalten ist. Die Schneidmesser (8, 9) sind wie eine Diskusscheibe gestaltet, die eine umlaufende Schneidkante aufweist.

## Beschreibung

Die Erfindung betrifft ein Handwerkzeug zum Abschneiden von Rohrstücken von Rohren aus metallischen, insbesondere nichteisenmetallischen Werkstoffen oder Kunststoff.

Für den Aufbau von Klimageräten und in der Installationstechnik werden Rohre aus Kupfer oder Aluminium in einer Vielzahl von unterschiedlichen Längen benötigt. Dabei ist es wünschenswert, Rohrstücke problemlos von einem Rohrstrang abschneiden zu können. Für diese Zwecke ist ein von Hand zu betätigender Rohrabschneider bekannt, bei dem mit Hilfe eines rotierbaren kreisrunden Schneidmessers in der Rohrwandung ein umlaufender Schnitt erzeugt wird. Ein solcher Rohrabschneider enthält einen U-förmigen Aufnahmekopf, in den das Rohr für den Schneidvorgang eingelegt wird. An einem Schenkel des Aufnahmekopfes sind wenigstens zwei Stützrollen gelagert, die das Rohr an der Mantelfläche abstützen. Der andere Schenkel des Aufnahmekopfes trägt ein scheibenartiges, frei drehbares Schneidmesser und ist mit Hilfe einer Gewindespindel quer zur Rohrachse bewegbar. Sobald das Schneidmesser mit der Rohrwandung in Druckberührung steht, wird der Rohrabschneider von Hand um das Rohr herumgedreht, wobei der Schneiddruck von Zeit zu Zeit neu eingestellt wird. Mit einer Anzahl von Drehungen ist auf diese Weise in der Rohrwandung ein durchgehender Schnitt erzeugbar.

Der bekannte Rohrabschneider ist nicht in jeder Hinsicht zufriedenstellend. So ist zunächst dieser Rohrabschneider in solchen Fällen nicht einsetzbar, in denen bei einer bereits verlegten Rohrleitung der Einbauraum eine volle Drehung des Rohrabschneiders nicht zuläßt. Außerdem wird für die Positionierung und die Ausführung des Schnittes relativ viel Zeit benötigt. Die Erfindung will hier Abhilfe schaffen.

Die Aufgabe der Erfindung besteht darin, ein Handwerkzeug zum Abschneiden von Rohrstücken zu schaffen, mittels dessen ein Trennschnitt schneller als bisher ausgeführt werden kann, welches auch an weniger gut zugänglichen Stellen einsetzbar ist und sich durch eine äußerst einfache Handhabung auszeichnet.

Diese Aufgabe wird erfindungsgemäß dadurch gelöst, daß das Werkzeug als Handzange mit zwei Klemmbacken ausgebildet ist und daß an den Klemmbacken wenigstens drei kreisrunde Schneidmesser in einer gemeinsamen, zur Schwenkachse der Zange senkrechten Ebene frei drehbar gelagert sind, von denen zwei Schneidmesser an einer Klemmbacke und das dritte Schneidmesser an der anderen Klemmbacke angeordnet sind.

Vorteilhafte Weiterbildungen sind in den Unteransprüchen beschrieben. Danach ist bei einer bevorzugten Ausführungsform jede einzelne Klemmbacke wie eine zweischenklige Gabel gestattet, wobei zwischen den Gabelschenkeln die Schneidmesser angeordnet sind.

Als weitere vorteilhafte Lösung ist vorgesehen, daß jedes Schneidmesser auf einem Bolzen drehbar gelagert ist, der mit seinen Enden in Bohrungen der Gabelschenkel drehfest gehalten ist.

Die Schneidmesser sind zweckmäßigerweise wie eine Diskusscheibe mit einer umlaufenden Schneidkante ausgebildet.

Ein wesentlicher Vorteil der neuen Rohrabschneidezange ist darin zu sehen, daß der Schneidvorgang gleichzeitig an drei Stellen des Rohrumfangs ausgeführt wird. Somit braucht für die Erzeugung eines vollständigen Trennschnittes die Schneidzange lediglich über einen Schwenkbereich von weniger als ca. 160° hin- und herbewegt zu werden. Dank dieser Arbeitsweise ist die neue Rohrabschneidezange auch für Schneidarbeiten an Rohren mit beengten Einbauverhältnissen geeignet. Da die Gabelschenkel der Klemmbacken relativ schmal sind, kann die Rohrabschneidezange auch unmittelbar neben einer Lötstelle eingesetzt werden. Schließlich ermöglicht die Zangenkonstruktion die Anwendung eines etwa gleichbleibenden Schneiddruckes während des gesamten Schneidvorganges.

Ein Ausführungsbeispiel der Erfindung ist in der Zeichnung schematisch dargestellt und wird nachfolgend näher erläutert. Es zeigt:
- Fig. 1: eine Seitenansicht einer Rohrabschneidezange gemäß der Erfindung,
- Fig. 2: eine Seitenansicht des Kopfteils der Rohrabschneidezange mit einem Schnitt der Klemmbacken in der Schnittebene der Schneidmesser in vergrößerter Darstellung und
- Fig. 3: eine Schnittansicht einer Klemmbacke in der Ebene der Linie I-I der Fig. 2.

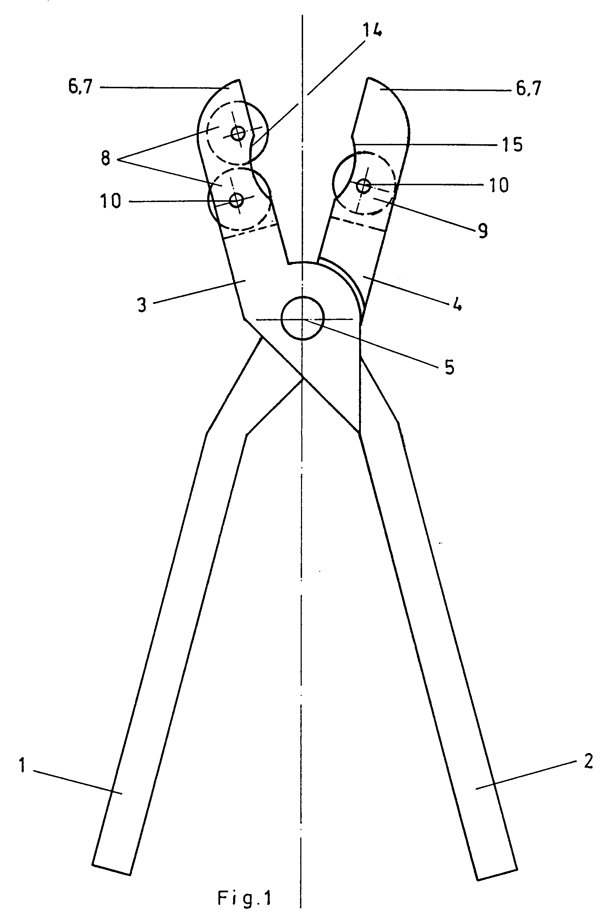

Wie Fig. 1 zeigt, ist die Rohrabschneidezange wie eine übliche Handzange ausgebildet. Sie enthält zwei gegeneinander bewegliche Zangenteile, nämlich zwei Griffschenkel 1, 2, zu denen je eine Klemmbacke 3, 4 gehört. Die beiden Zangenteile sind durch einen Bolzen 5 gelenkig miteinander verbunden.

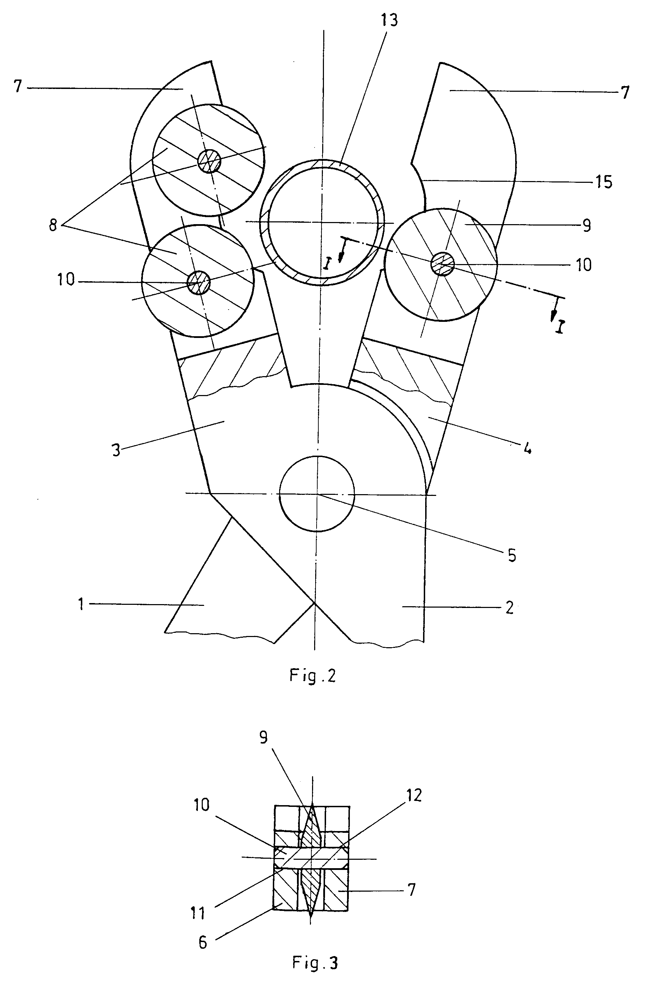

An jeder Klemmbacke 3, 4 ist das freie Ende als zweischenklige Gabel ausgebildet, wobei die parallelen Gabelschenkel 6, 7 einer Gabel deckungsgleich geformt sind. In dem Freiraum zwischen je zwei Gabelschenkel 6, 7 sind kreisrunde Schneidmesser 8 bzw. 9 untergebracht. Dabei sind an der Klemmbacke 3 zwei Schneidmesser 8 nebeneinander angeordnet, während an der anderen Klemmbacke 4 nur ein Schneidmesser 9 vorgesehen ist. Jedes einzelne Schneidmesser 8, 9 ist auf einem Bolzen 10 drehbar gelagert, der mit seinen Enden in paarweise fluchtenden Bohrungen 11, 12 drehfest gehalten ist, wie es aus Fig. 3 ersichtlich ist.

Fig. 2 zeigt die Rohrabschneidezange in Verbindung mit einem Rohr 13 in einer Stellung, bevor die Schneidmesser 8, 9 mit der Rohrwandung in Berührung kommen. Diese Darstellung läßt auch erkennen, daß die beiden Schneidmesser 8 an der Klemmbacke 3 relativ nah nebeneinander angeordnet sind. Dabei sind die Bolzen 10 gegenüber der Mittellinie der Klemmbacke 3 nach entgegengesetzten Seiten versetzt angeordnet. Durch diese Anordnung wird bei einer mittleren Offenstellung der Zange eine etwa symmetrische Dreipunktstellung der Schneidmesser 8, 9 untereinander erzielt.

Die Gabelschenkel 6, 7 weisen an ihren Innenkanten, wie aus Fig. 1 ersichtlich, etwa sichelförmige Aussparungen 14, 15 auf. Durch diese Aussparungen werden Berührungen zwischen der Wandung des Rohres 13 und den Gabelschenkeln 6, 7 vermieden.

Die drei Schneidmesser 8, 9 sind gleich groß und können nach Entfernen der Lagerbolzen 10 leicht ausgewechselt werden. Die neue Rohrabschneidezange ist für Rohre mit unterschiedlichen Außendurchmessern einsetzbar, beispielsweise für Durchmesser von 4 bis 16 mm und größer. Der Schneiddruck kann durch Handkraft entsprechend den Erfordernissen leicht und im wesentlichen stufenlos eingestellt werden.

## Patentansprüche

1. Handwerkzeug zum Abschneiden von Rohrstücken von Rohren aus metallischen, insbesondere nichteisenmetallischen Werkstoffen oder Kunststoff, dadurch gekennzeichnet, daß das Werkzeug als Handzange mit zwei Klemmbacken (3, 4) ausgebildet ist und daß an den Klemmbacken (3, 4) wenigstens drei kreisrunde Schneidmesser (8, 9) in einer gemeinsamen, zur Schwenkachse der Zange senkrechten Ebene frei drehbar gelagert sind, von denen zwei Schneidmesser (8) an einer Klemmbacke (3) und das dritte Schneidmesser (9) an der anderen Klemmbacke (4) angeordnet sind.

2. Handwerkzeug nach Anspruch 1, dadurch gekennzeichnet, daß jede einzelne Klemmbacke (3, 4) wie eine zweischenklige Gabel gestaltet ist und daß zwischen den Gabelschenkeln (6, 7) die Schneidmesser (8, 9) angeordnet sind.

3. Handwerkzeug nach Anspruch 2, dadurch gekennzeichnet, daß jedes Schneidmesser (8, 9) auf einem Bolzen (10) drehbar gelagert ist, der mit seinen Enden in Bohrungen der Gabelschenkel (6, 7) drehfest gehalten ist.

4. Handwerkzeug nach einem der Ansprüche 1 bis 3, dadurch gekennzeichnet, daß die Schneidmesser (8, 9) wie eine Diskusscheibe mit einer umlaufenden Schneidkante ausgebildet sind.
